# EUROPEAN PATENT APPLICATION

(11) **EP 4 404 129 A1**
(43) Date of publication of application: **24.07.2024**
(21) Application number: 22869792.6
(22) Date of filing: 26.08.2022
(51) Int. Cl.: G06Q 40/06

(54) **INFORMATION PROCESSING SYSTEM**

(30) Priority: 14.09.2021 JP 2021149184
(71) Applicant: Nomura Research Institute, Ltd., Chiyoda-ku Tokyo 100-0004 (JP)
(72) Inventor: OHTA Kengo, Tokyo 100-0004 (JP)
(74) Representative: Hoffmann Eitle
(86) International application number: PCT/JP2022/032282
(87) International publication number: WO 2023/042645

(57) **Abstract**

An information processing system includes an investor terminal and a server. The server stores information regarding a financial product which is periodically invested by an individual investor and which makes diversified investments in a plurality of companies. The server selects, on the basis of a predetermined algorithm, a specific company to be presented to the individual investor from among the plurality of companies that are investment destinations of the financial product. The server provides, to the investor terminal, information in which an activity of the specific company described above is associated with the individual investor.

## Description

### Technical Field

The present disclosure relates to a data processing technology, and particularly to an information processing system.

### Background Art

In recent years, there are many financial products such as an investment trust, an exchange traded fund (ETF), discretionary investment management (a robo-adviser, fund wrap, and the like), and direct indexing as means for individual investors to make diversified investments in various companies. Among them, the investment trust is increasingly incorporated into portfolios of individual investors (see, for example, Patent Literature 1).

### Citation List

### Patent Literature

Patent Literature 1: JP 2020-144947 A

### Summary of Invention

### Technical Problem

The financial products such as the investment trust, the ETF, the discretionary investment management, and the direct indexing are effective for long-term asset building because diversification of investment destinations reduces a risk of being dependent on a specific company, and making a reserve investment leads to diversification also in terms of time and reduces a risk of being dependent on a specific timing. Such investment means, such as the financial products and the reserve investment, needs to be utilized by individual investors.

However, in such an investment through the financial products, an individual investor is less likely to realize in which company his/her money is specifically invested and how he/she contributes to society through an activity of the company, and it is difficult to maintain an interest and a concern of the individual investor in an act of the investment itself. Moreover, in the case of performing the reserve investment, once reserving is set up, there is no opportunity to make a decision or take action by oneself for a while, and thus it is more difficult to maintain the interest and the concern.

The present disclosure has been made on the basis of recognition of the above problem by the present inventor, and an object thereof is to provide a technology of supporting an individual investor to maintain an interest and a concern in a reserve investment.

### Solution to Problem

In order to solve the above problem, an information processing system of an aspect of the present invention includes: a storage unit that stores information regarding a financial product which is periodically invested by an individual and which makes diversified investments in a plurality of companies; a selection unit that selects, on the basis of a predetermined algorithm, a specific company to be presented to the individual from among the plurality of companies that are investment destinations of the financial product; and a presentation unit that presents, to the individual, information in which an activity of the specific company selected by the selection unit is associated with the individual.

Note that any combination of the above constituent elements or the expression of the present disclosure converted between a device, a method, a computer program, a recording media storing the computer program, and the like is also effective as an aspect of the present disclosure.

### Advantageous Effects of Invention

According to the technology of the present disclosure, it is possible to support an individual investor to maintain an interest and a concern in a reserve investment.

### Brief Description of Drawings

Fig. 1 is a diagram illustrating a configuration of an information processing system of an embodiment.
Fig. 2 is a block diagram illustrating functional blocks of a server in Fig. 1.
Fig. 3 is a flowchart illustrating an operation of the server in Fig. 1.
Fig. 4 is a diagram illustrating an example of investment support information.
Figs. 5(a) and 5(b) are diagrams illustrating an example of a correspondence relationship between a fund and a theme.
Fig. 6 is a diagram illustrating an example of statistical information in a first modification.
Fig. 7 is a diagram illustrating an example of a CO2 reduction amount of a fund.
Fig. 8 is a diagram illustrating an example of statistical information in a second modification.
Fig. 9 is a diagram illustrating an example of a CO2 reduction amount of a fund.

### Description of Embodiments

A device or an entity of a method in the present disclosure includes a computer. The computer executes a computer program to implement functions of the device or the entity of the method in the present disclosure. The computer includes a processor that operates according to the computer program as a main hardware configuration. A type of the processor is not limited as long as the processor can implement the functions by executing the computer program. The processor includes one or a plurality of electronic circuits including a semiconductor integrated circuit (IC, LSI, or the like). The computer program is recorded in a non-transitory computer-readable recording medium such as a ROM, an optical disc, or a hard disk drive. The computer program may be stored in advance in the recording medium, or may be supplied to the recording medium via a wide area communication network including the Internet or the like.

An outline of an embodiment will be described. A long-term, reserve, and diversification type investment (hereinafter, also referred to as "reserve investment") is effective for long-term asset building, and a risk is reduced by diversifying investment destinations. Thus, a financial product that exhibits a sufficient diversification effect (described as an "investment trust" used by the largest number of individual investors in the embodiment) needs to be incorporated in a portfolio of an individual investor and be a subject of a long-term reserve investment. The investment trust of the embodiment is a subject to be periodically (for example, once a month) invested by an individual investor for a long period of time such as 10 years, and is a fund that makes diversified investments in a plurality of companies.

In a reserve investment through the fund, it has been difficult for an individual investor to realize how his/her money contributes to a company activity and society. Furthermore, a financial institution that sells the investment trust (for example, a securities company, a bank, an asset management company, or the like) has not been able to provide information that maintains an interest and a concern in the reserve investment to an individual investor who invests in the investment trust, and has not been able to sufficiently maintain a point of contact with the customer.

Thus, even when the financial institution sells or organizes an excellent investment trust, the financial institution has not been able to transmit its original value other than its profitability to the individual investor, and has not been able to lead to branding of the financial institution or cultivation of customer loyalty to the financial institution. Furthermore, since the financial institution has not been able to maintain the point of contact with the customer, there has been a case where the financial institution misses an opportunity of up celling and cross celling at a timing of guiding or setting a new fund matching the interest or the concern of the customer or a timing when the customer starts to be interested in an individual stock.

In view of such a situation, the present inventor has considered that a mechanism for maintaining the interest and the concern of the individual investor in the reserve investment is needed. In the embodiment, there is proposed an information processing technology that supports maintaining an interest and a concern of an individual investor soundly through points of contact about several times a month without changing financial behavior of a reserve investment of the individual investor and without making the individual investor be glad and sad by turns due to fluctuations in short-term yields. The information processing technology of the embodiment is also applicable to reserve investment type financial products other than the investment trust, and is also applicable to, for example, an ETF, discretionary investment management, and direct indexing.

Note that the investment trust includes a fund that makes an environment, social, governance (ESG) investment (also referred to as an "ESG fund") and a fund that makes a thematic investment (also referred to as a "thematic fund"). The ESG investment may include not only magnitude of a profit of a company but also a process (in other words, business) through which the profit has been generated in an investment determination to the company. In a typical ESG fund, a brand of an investment destination is selected from a viewpoint of a degree of influence on solving a social problem (for example, decarbonization). Furthermore, in the thematic investment, a company that contributes to a specific theme (for example, automatic driving, space development, or the like) is selected as an investment destination.

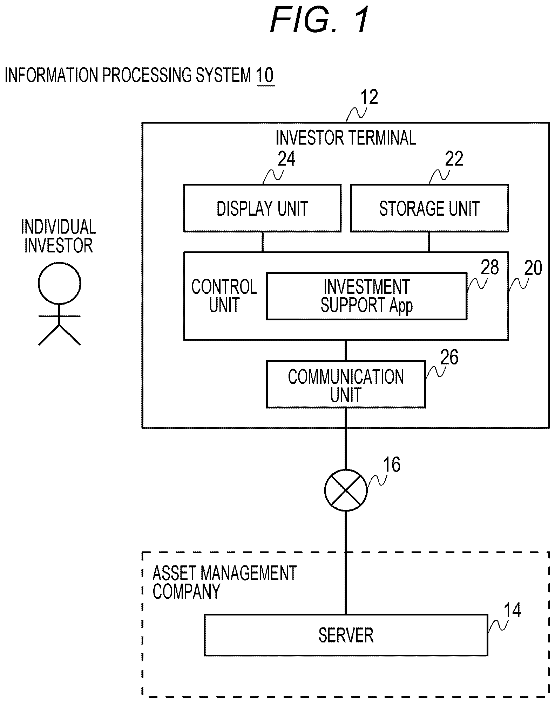

Details of the embodiment will be described. Fig. 1 illustrates a configuration of an information processing system 10 of the embodiment. The information processing system 10 includes an investor terminal 12 and a server 14. The investor terminal 12 is an information processing terminal operated by an individual investor. The investor terminal 12 may be a PC, a smartphone, or a tablet terminal. Although one investor terminal 12 is depicted in Fig. 1, the actual information processing system 10 includes a plurality of investor terminals 12 corresponding to a plurality of individual investors.

The server 14 is an information processing device of an asset management company, and provides various types of information regarding asset management to the investor terminal 12. The investor terminal 12 is connected to the server 14 via a communication network 16 including a LAN, a WAN, the Internet, and the like.

Fig. 1 includes a block diagram illustrating functional blocks of the investor terminal 12. In terms of hardware, each block illustrated in the block diagram of the present specification can be implemented by a processor (CPU and the like) of a computer, elements or electronic circuits including a memory, and a mechanical device, and in terms of software, each block can be implemented by a computer program and the like. Here, the functional blocks to be implemented by cooperation therebetween are depicted. Therefore, those skilled in the art will understand that these functional blocks can be implemented in various forms by a combination of hardware and software.

The investor terminal 12 includes a control unit 20, a storage unit 22, a display unit 24, and a communication unit 26. The control unit 20 executes various types of data processing. The storage unit 22 stores data to be referred to or updated by the control unit 20. The display unit 24 displays various types of information. The communication unit 26 communicates with an external device according to a predetermined communication protocol. For example, the control unit 20 transmits and receives data to and from the server 14 via the communication unit 26.

In the investor terminal 12, an application (hereinafter, also referred to as "investment support App 28") that supports a reserve investment by the individual investor is installed. By executing the investment support App 28, the control unit 20 acquires various types of information regarding a financial product to be invested by the wealthy individual from the server 14, and causes the display unit 24 to display the acquired information. This information includes, for example, information regarding an investment trust which is sold by the asset management company and invested by the individual investor.

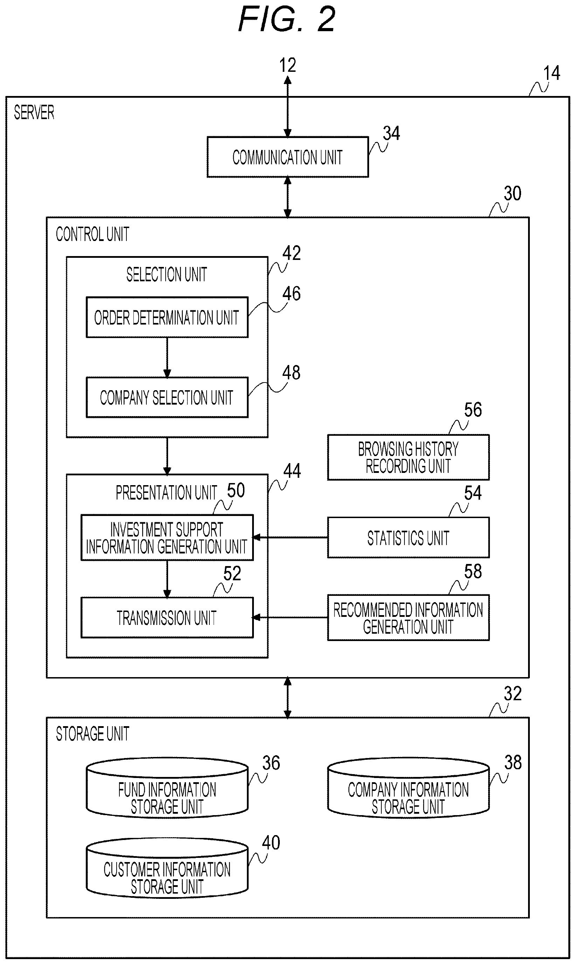

Fig. 2 is a block diagram illustrating functional blocks of the server 14 in Fig. 1. The server 14 includes a control unit 30, a storage unit 32, and a communication unit 34. The control unit 30 executes various types of data processing. The storage unit 32 stores data to be referred to or updated by the control unit 30. The communication unit 34 communicates with an external device according to a predetermined communication protocol. For example, the control unit 30 transmits and receives data to and from the investor terminal 12 via the communication unit 34.

The storage unit 32 includes a fund information storage unit 36, a company information storage unit 38, and a customer information storage unit 40. The fund information storage unit 36 stores information (also referred to as "fund information") regarding a plurality of funds sold by the asset management company to the individual investor. The fund information includes information regarding an investment trust. Furthermore, the fund information includes a subject flag and breakdown information regarding each of a plurality of investment trusts. The subject flag is data indicating whether investment support information as described below is to be provided (on) or not (off). The breakdown information includes information indicating a breakdown of companies (brands) to be investment destinations, in other words, includes information indicating a configuration ratio of the funds.

The company information storage unit 38 stores information (also referred to as "company information") regarding a plurality of companies that are investment destinations of the plurality of funds (including the investment trust) sold by the asset management company to the individual investor. The company information includes outline information (features, a consolidated business, a head office location, and the like) regarding each of the plurality of companies and various types of electronic content data regarding each of the companies. The electronic content data includes, for example, reports (for example, analyst reports on a company or industry basis), news, articles, press releases, and the like.

The customer information storage unit 40 is information regarding a customer of the asset management company, and specifically stores information (also referred to as "customer information") regarding the customer who has purchased the investment trust (that is, the individual investor in Fig. 1). The customer information includes an amount of money that each individual investor periodically invests in the investment trust and a sum of investment amounts so far. Furthermore, the customer information includes portfolio information (in other words, asset configuration information) of each individual investor. The portfolio information includes information indicating an amount of assets of the individual investor based on each of the plurality of investment trusts. The amount of assets may be derived from the number of holding units of the individual investor (the number of holding stocks in the case of the ETF) and a net asset value of the fund. Furthermore, personal information includes a browsing history of electronic content (reports, news, articles, and the like) of each individual investor.

The control unit 30 includes a selection unit 42, a presentation unit 44, a statistics unit 54, a browsing history recording unit 56, and a recommended information generation unit 58. A computer program in which functions of these plurality of functional blocks are implemented may be installed in a storage (the storage unit 32 or the like) of the server 14. The control unit 30 may be implemented by a processor (CPU or the like) of the server 14. The processor of the server 14 may exhibit the functions of these plurality of functional blocks by reading the computer program described above into a main memory and executing the computer program. Note that the functions of the plurality of functional blocks illustrated in Fig. 2 may be implemented in one computer or may be implemented in a distributed manner in a plurality of computers.

The selection unit 42 selects, on the basis of a predetermined algorithm, a specific company that presents information to each individual investor from among the plurality of companies that are the investment destinations of the investment trusts. The specific company can also be referred to as a company to be introduced to the individual investor, and is hereinafter referred to as "introduction company". The selection unit 42 selects a suitable introduction company for each individual investor on the basis of portfolios of the plurality of individual investors and configuration ratios of the investment destinations of the plurality of investment trusts. The selection unit 42 includes an order determination unit 46 and a company selection unit 48.

The presentation unit 44 presents investment support information to each of the plurality of individual investors. The investment support information to be presented to each individual investor is information in which an activity of an introduction company selected by the selection unit 42 is associated with each individual investor. The presentation unit 44 includes an investment support information generation unit 50 and a transmission unit 52.

The statistics unit 54 generates a plurality of pieces of statistical information regarding the plurality of individual investors. Specifically, the statistics unit 54 generates, as statistical information regarding a certain individual investor, statistical information regarding an investment of the individual investor in one or more investment trusts. The presentation unit 44 further presents, to each individual investor, the statistical information regarding each individual investor generated by the statistics unit 54 as information indicating contribution of each individual investor.

The browsing history recording unit 56 stores browsing history data including company information browsed by each of the plurality of individual investors in the customer information storage unit 40. The browsing history recording unit 56 may create the browsing history data of each individual investor on the basis of information acquisition from the investor terminal 12 of each individual investor, and the browsing history may include evaluation regarding electronic content browsed by each individual investor.

The recommended information generation unit 58 generates information (hereinafter, also referred to as "recommended fund information") of a fund recommended to each individual investor on the basis of a browsing history of each individual investment stored in the customer information storage unit 40. The presentation unit 44 further presents, to each individual investor, the recommended fund information for each individual investor generated by the recommended information generation unit 58.

An operation of the information processing system 10 with the above configuration will be described.

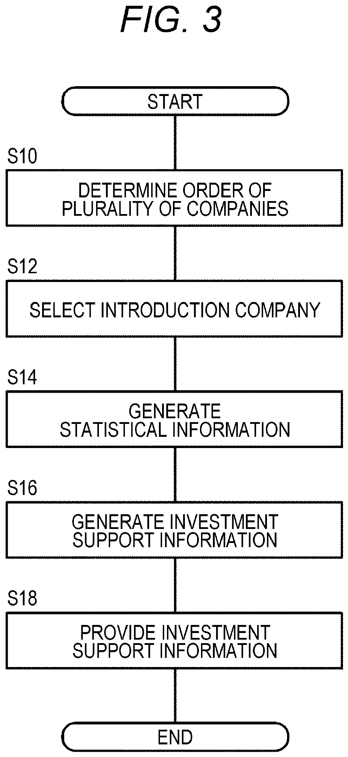

Fig. 3 is a flowchart illustrating an operation of the server 14 in Fig. 1. In a case where a timing at which the investment support information needs to be provided to the individual investor has come (for example, once a month or the like), the server 14 executes processing in Fig. 3. The server 14 executes the processing in Fig. 3 on each of the plurality of individual investors. Hereinafter, a specific individual investor among the plurality of individual investors will be referred to as a "subject investor", and the processing in Fig. 3 regarding the subject investor will be described.

The order determination unit 46 of the server 14 determines, on the basis of a configuration ratio of investment destinations of investment trusts invested by the subject investor, an order of a plurality of companies that are the investment destinations of the investment trusts. Specifically, the order determination unit 46 determines the order of the plurality of companies that are the investment destinations of the plurality of investment trusts invested by the subject investor on the basis of the configuration ratio of the investment destinations of each of the plurality of investment trusts for which a subject flag is set to ON, stored in the fund information storage unit 36, and an amount of assets of the subject investor based on each of the plurality of investment trusts, stored in the customer information storage unit 40. That is, the order determination unit 46 determines the order of the plurality of companies related to the subject investor (S10) .

As an example, a portfolio of the subject investor for a certain month is assumed as follows. An amount of assets based on a fund 1 is 1 million yen. An amount of assets based on a fund 2 is 2 million yen. An amount of assets based on a fund 3 is 2 million yen. Furthermore, it is assumed that the fund 1 and the fund 2 are funds (investment trusts in the embodiment) to be provided with the investment support information, and the fund 3 is a fund not to be provided with the investment support information. Furthermore, it is assumed that a configuration ratio of investment destinations of the fund 1 is 8% for a company A, 6% for a company B, and 5% for a company C. It is assumed that a configuration ratio of investment destinations of the fund 2 is 10% for a company D, 9% for a company E, 2% for the company A, and 1% for the company C.

In this case, the order determination unit 46 determines an order of the companies A to E regarding the subject investor as follows.
First: Company D (200,000 yen = 2 million yen × 10%)
Second: Company E (180,000 yen = 2 million yen × 9%)
Third: Company A (120,000 yen = 1 million yen × 8% + 2 million yen × 2%)
Fourth: Company C (70,000 yen = 1 million yen × 5% + 2 million yen × 1%)
Fifth: Company B (60,000 yen = 1 million yen × 6%)

As a modification, the order determination unit 46 may determine the order of the plurality of companies related to the subject investor on the basis of the configuration ratio of the investment destinations of each of the plurality of investment trusts periodically invested by the subject investor, stored in the fund information storage unit 36, and an investment amount of the subject investor in each of the plurality of investment trusts, stored in the customer information storage unit 40.

The company selection unit 48 of the server 14 selects an introduction company for the subject investor on the basis of the order of the plurality of companies related to the subject investor determined by the order determination unit 46 (S12). Basically, the company selection unit 48 preferentially selects a company with a high order as the introduction company. When a specific introduction company is selected for a specific subject investor, the company selection unit 48 stores, in the customer information storage unit 40, information (can also be referred to as an introduction company history) in which the subject investor, the introduction company, and a selection date and time are associated. The company selection unit 48 refers to the introduction company history in the customer information storage unit 40 to identify a company that has been introduced to each subject investor. Note that, even when the company has been introduced, in a case where information regarding the company is different (in a case where there is updated information, or the like), the same company may be introduced a plurality of times.

Here, an example of selection of the introduction company for the subject investor in a case where the order of the companies A to E regarding the subject investor is determined as described above is illustrated. (Pattern 1) When a report or news of the first company D is stored in the company information storage unit 38 and the company D has not been introduced to the subject investor this year, the company D is selected as the introduction company. (Pattern 2) When the report or the news of the first company D is not stored in the company information storage unit 38, a report or news of the second company E is stored in the company information storage unit 38, and the company E has not been introduced to the subject investor this year, the company E is selected as the introduction company.

(Pattern 3) When the company D and the company E have been introduced to the subject investor this year and a report or news of the third company A is stored in the company information storage unit 38, the company A is selected as the introduction company. (Pattern 4) In a case where report or news of the companies A to E are not stored in the company information storage unit 38, another company (for example, a company Z) that has not been introduced to the subject investor this year is selected as the introduction company. Note that, in the case of the pattern 4, it may not be an essential condition that the company Z is included in brands of the investment trusts invested by the subject investor, at the time of selection of the introduction company. That is, in the pattern 4, the introduction company may be selected from other than the brands of the investment trusts invested by the subject investor.

The statistics unit 54 of the server 14 generates statistical information regarding an investment by the subject investor in one or more investment trusts on the basis of the information regarding the subject investor stored in the customer information storage unit 40 (S14). The statistical information of the embodiment is information quantitatively indicating contribution of the subject investor via a reserve investment, and includes the number of contributing companies, the number of contributing countries, and a total investment amount.

The number of contributing companies is the number of companies as the investment destinations summed over one or more investment trusts. The number of contributing countries is the number of countries as the investment destinations summed over one or more investment trusts. The number of contributing countries in the embodiment is a total number of countries in which a head office of each company as the investment destination is located. The total investment amount is an investment amount of money of the subject investor so far, summed over one or more investment trusts. In other words, the investment amount of money is a total amount of money that the subject investor has invested so far in one or more investment trusts.

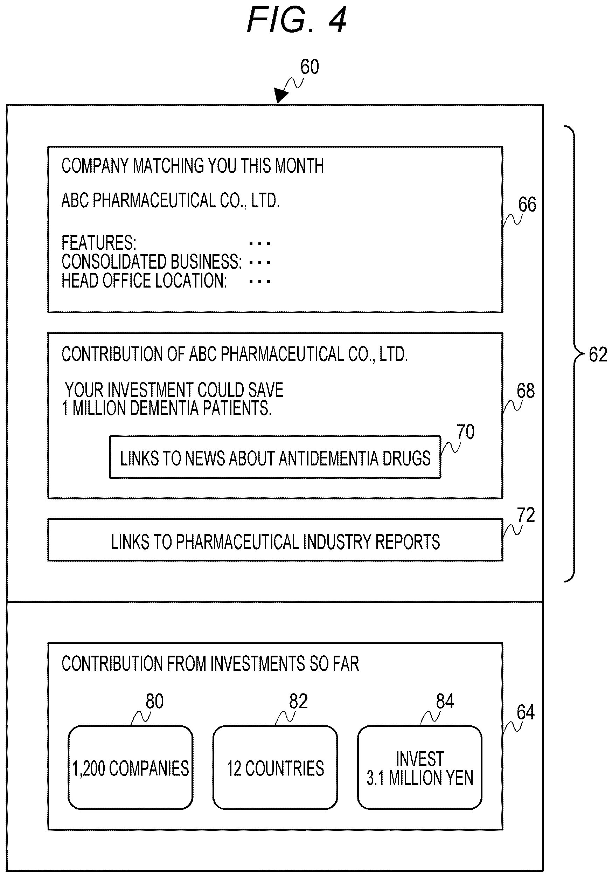

The investment support information generation unit 50 of the server 14 generates data of the investment support information (S16). Fig. 4 illustrates an example of the investment support information. Investment support information 60 includes introduction company information 62 and statistical information 64. The introduction company information 62 is set on the basis of the introduction company selected by the company selection unit 48. The introduction company information 62 includes an introduction company outline 66, introduction company activity information 68, and an industry information link 72.

The introduction company outline 66 includes outline information of the introduction company stored in the company information storage unit 38. The introduction company activity information 68 includes content in which an activity of the introduction company (development of an antidementia drug in Fig. 4) is associated with the subject investor. This content may include a sentence or an image indicating that the investment of the subject investor has contributed to the activity of the introduction company. Furthermore, the introduction company activity information 68 includes a hyperlink (company activity information link 70) to electronic content (analyst reports, news, articles, and the like) regarding the activity of the introduction company, which is stored in the company information storage unit 38. The industry information link 72 is a hyperlink to electronic content (analyst reports, news, articles, and the like) regarding an industry (pharmaceutical industry in Fig. 4) to which the introduction company belongs.

The introduction company activity information 68 can be implemented at low cost by utilizing content already investigated by the asset management company, a bank, a securities company, and the like, an analyst report, news, and the like. Since the introduction company activity information 68 does not determine a traded brand or a trade timing, freshness, strictness, and a detail level of information may be low, and an interest and an impact as a story are emphasized.

The statistical information 64 is set on the basis of the statistical information generated by the statistics unit 54. The statistical information 64 includes the number of contributing companies 80, the number of contributing countries 82, and the total investment amount 84 described above. Furthermore, the statistical information 64 includes content indicating that the number of contributing companies 80, the number of contributing countries 82, and the total investment amount 84 are contribution of the subject investor.

The transmission unit 52 of the server 14 transmits the data of the investment support information generated by the investment support information generation unit 50 to the investor terminal 12 (S18). The investment support App 28 of the investor terminal 12 receives the data of the investment support information transmitted from the server 14, and causes the display unit 24 to display the investment support information. For example, the investment support information 60 in the format illustrated in Fig. 4 may be displayed on the display unit 24 of the investor terminal 12. Note that the content of the introduction company information 62 and the statistical information 64 of the investment support information 60 may be different for each individual investor according to a portfolio of each individual investor and a configuration ratio of investment destinations of investment trusts invested by each individual investor.

According to the information processing system 10 of the embodiment, it is possible to provide a psychological satisfaction that "I also contribute to a company or society as an investor" to an individual investor through a reserve investment (for example, a periodic investment in an ESG fund or a thematic fund). Furthermore, it is possible to make the individual investor recognize an activity of a company and a result beyond an investment trust, and it is possible to make the individual investor realize an impact generated by an own investment on the company activity and the society. With this configuration, a point of contact between the individual investor and a financial institution can be maintained without difficulty without changing investment behavior of the individual investor.

Furthermore, statistical information such as a total investment amount, the number of investment destination companies, and the number of investment destination countries is presented as information indicating quantitative contribution of the individual investor. Values of these pieces of the statistical information increase steadily by continuing the reserve investment. By presenting such statistical information to the individual investor as contribution by the individual investor, it is possible to give the individual investor satisfaction with continuing the reserve investment steadily.

The investment support App 28 of the investor terminal 12 acquires various types of electronic content (reports and the like) regarding the company selected by the individual investor from the server 14, and causes the display unit 24 to display the acquired electronic content. The browsing history recording unit 56 of the server 14 stores, in the customer information storage unit 40, a browsing history of each individual investor including information (identification information of a company, or the like) regarding the electronic content provided to the investor terminal 12 of each individual investor. For example, in a case where the company activity information link 70 and the industry information link 72 set in the investment support information 60 are selected and electronic content thereof is provided from the server 14 to the investor terminal 12, the browsing history recording unit 56 may record, in the browsing history, identification information of the introduction company or identification information of the industry to which the introduction company belongs.

The browsing history data of each individual investor may include evaluation regarding the electronic content browsed by each individual investor. The evaluation may include at least one of (1) whether or not a "like" button is pressed for the electronic content, (2) whether or not the electronic content is registered as a favorite, (3) whether or not the electronic content is downloaded in the case of downloadable electronic content, and (4) whether or not the electronic content is stored in a website (in other words, bookmarked) in the case of electronic content that can be stored.

The recommended information generation unit 58 of the server 14 refers to the browsing history of each individual investor stored in the customer information storage unit 40 to generate recommended fund information for each individual investor. A known recommendation technology may be used to generate the recommended fund information. The transmission unit 52 of the server 14 transmits the recommended fund information for each individual investor generated by the recommended information generation unit 58 to the investor terminal 12 of each individual investor. The investment support App 28 of the investor terminal 12 of each individual investor causes the display unit 24 to display the recommended fund information transmitted from the server 14.

According to the information processing system 10 of the embodiment, it is possible to provide an individual investor with information of a fund matching an interest and a concern of the customer, and to effectively support up celling and cross celling.

The present disclosure has been described above on the basis of the embodiment. Those skilled in the art will understand that contents described in the embodiment are examples, that various modifications can be made to the combination of constituent elements or processing processes of the embodiment, and that such modifications are also within the scope of the present disclosure.

A first modification will be described. The statistical information may include the number of contribution themes as the information indicating quantitative contribution of the individual investor. The number of contribution themes is the number of themes to be the investment destinations summed over one or more investment trusts invested by the individual investor. The themes may include, for example, social themes, environmental themes, and technical themes. Each fund may be associated with a theme used to describe the fund itself. Furthermore, each fund may be associated with a theme indicated by a widely used framework or standard, such as sustainable development goals (SDGs) or EU taxonomy.

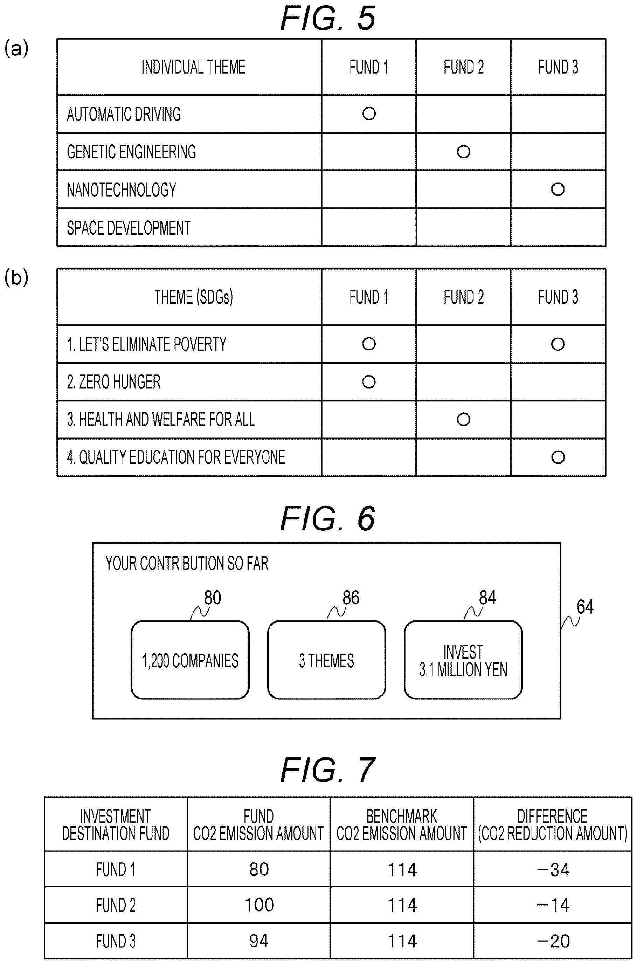

The fund information storage unit 36 of the server 14 may store a correspondence relationship between an investment trust (for example, a thematic fund) and a theme. Figs. 5(a) and 5(b) illustrate an example of a correspondence relationship between a fund and a theme. Fig. 5(a) illustrates a pattern in which the fund and the theme are associated on a one-to-one basis. In Fig. 5(a), the fund 1 is associated with a theme "automatic driving", the fund 2 is associated with a theme "genetic engineering", and the fund 3 is associated with a theme "nanotechnology". Fig. 5(b) illustrates a pattern in which a fund is associated with a theme of SDGs.

The statistics unit 54 of the server 14 may refer to the correspondence relationship stored in the fund information storage unit 36 to count themes associated with one or more investment trusts invested by the subject investor, and generate statistical information including a total number of the themes as the number of contribution themes. For example, in a case where the subject investor invests in the fund 1, the fund 2, and the fund 3 in Fig. 5(a), the number of contribution themes may be derived as "3".

Fig. 6 illustrates an example of the statistical information in the first modification. The investment support information generation unit 50 of the server 14 may set the number of contribution themes 86 in the statistical information 64 of the investment support information 60. According to the information processing system 10 of the first modification, it is possible to present contribution to a company, society, an environment, a technology, and the like by the reserve investment to the individual investor in a quantitatively easy-to-understand manner in the form of the number of themes contributed.

A second modification will be described. The statistical information may include, as the information indicating quantitative contribution of the individual investor, a reduction amount of CO2 (carbon dioxide) summed over one or more investment trusts invested by the subject investor, based on the companies as the investment destinations.

In recent years, regulations in a direction of disclosing sustainability information of investment products such as funds are going to be strengthened. The regulation in Europe is, for example, Sustainable Finance Disclosure Regulation (SFDR). Under such a situation, information disclosure of a CO2 emission amount, CO2 emission intensity, and the like has started for each fund. Furthermore, even in a case where a fund does not disclose these pieces of information, these pieces of information can be calculated from disclosure data of an individual company incorporated in the fund.

A CO2 reduction amount for each fund can be derived by comparing CO2 emission amounts (or CO2 emission intensity) of the investment destination companies incorporated in the fund with a CO2 emission amount (or CO2 emission intensity) based on a known benchmark (for example, All Country World Index (ACWI)). Then, by weighting and adding up the CO2 reduction amount of each fund as the investment destination of the individual investor by an investment ratio, the CO2 reduction amount according to a portfolio of the individual investor can be calculated.

For example, the fund information storage unit 36 of the server 14 may further store a CO2 emission amount of each of the plurality of funds (including investment trusts) and the CO2 emission amount based on the known benchmark. The CO2 emission amount based on the benchmark may be, for example, an average value of CO2 emission amounts of ACWI brand companies.

The statistics unit 54 of the server 14 may obtain a difference between the CO2 emission amount of one or more investment trusts invested by the subject investor, stored in the fund information storage unit 36, and the CO2 emission amount based on the benchmark, and derive the difference as the CO2 reduction amount of each investment trust.

Fig. 7 is a diagram illustrating an example of a CO2 reduction amount of a fund. Here, it is assumed that the subject investor invests in the fund 1, the fund 2, and the fund 3. A fund CO2 emission amount may be a value obtained by weight-averaging the CO2 emission amounts of the investment destination companies of each fund by a total market value (or sales, or the like) of each investment destination company. A benchmark CO2 emission amount may be a value obtained by weight-averaging the CO2 emission amounts of the ACWI brand companies by a total market value (or sales, or the like) of each brand company. A difference indicates a difference between the fund CO2 emission amount and the benchmark CO2 emission amount, that is, indicates a CO2 reduction amount of each fund. A unit of a value indicated in Fig. 7 is ton/1 million (M) USD.

The statistics unit 54 derives a CO2 reduction amount according to a portfolio (here, an investment amount in each fund) of the subject investor. For example, it is assumed that the investment amount of the subject investor is 0.01 M USD for the fund 1, 0.02 M USD for the fund 2, and 0.02 M USD for the fund 3. In this case, the statistics unit 54 derives the CO2 reduction amount according to the portfolio of the subject investor as 1.02 tons (= 34 × 0.01 + 14 × 0.02 + 20 × 0.02).

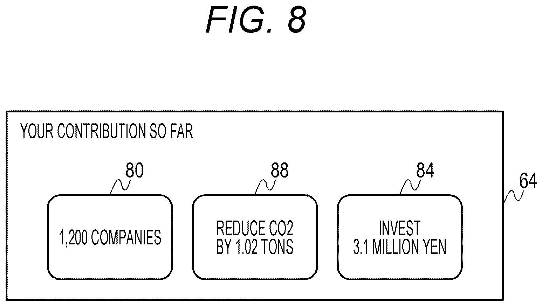

Fig. 8 illustrates an example of the statistical information in the second modification. The investment support information generation unit 50 of the server 14 may set a CO2 reduction amount 88 in the statistical information 64 of the investment support information 60. According to the information processing system 10 of the second modification, it is possible to present contribution to society by the reserve investment to the individual investor in a quantitatively easy-to-understand manner in the form of the CO2 reduction amount.

A third modification will be described. Although not mentioned in the embodiment above, a timing at which new investment support information is presented to a certain individual investor (for example, a timing at which the series of processing illustrated in Fig. 3 is executed) may be a timing of a change in a portfolio of the individual investor. For example, the timing may be a timing at which the individual investor starts a reserve investment in a new investment trust. Furthermore, the timing may be a timing at which a ratio of a specific investment trust in the portfolio of the individual investor changes by a predetermined threshold (for example, 5%) or more.

A fourth modification will be described. In the embodiment above, the server 14 is the device of the asset management company. However, as a modification, the server 14 may be a device of a securities company or a bank that sells an investment trust to the individual investor. Furthermore, the server 14 may be a device of a company (for example, an information service company or the like) different from both the asset management company and the securities company. The server 14 may include a fund information acquisition unit that acquires fund information from the device of the asset management company and stores the acquired fund information in the fund information storage unit 36. Furthermore, the server 14 may include a customer information acquisition unit that acquires customer information (for example, information regarding a fund invested by each individual investor, portfolio information, and the like) from the device of the asset management company or the investor terminal 12 and stores the acquired customer information in the customer information storage unit 40. Note that the customer information may be registered from the investor terminal 12 to the server 14 on the basis of an operation of the individual investor.

A fifth modification will be described. At least a part of the functions of the server 14 in the embodiment above may be implemented in the investor terminal 12. For example, at least a part of the functions of the server 14 in the embodiment above may be implemented in the investment support App 28 as a program module. A processor of the investor terminal 12 may present investment support information similar to that of the server 14 of the embodiment to the individual investor by executing the investment support App 28. In this case, fund information stored in the fund information storage unit 36 and company information (various types of electronic content such as reports) stored in the company information storage unit 38 may be provided to the investor terminal 12 from the device of the asset management company or a securities company.

A sixth modification will be described. In the embodiment above, the investment support App 28 is installed in the investor terminal 12, and the investor terminal 12 executes the investment support App 28 to acquire various types of information regarding asset management (for example, information illustrated in Fig. 4, or the like) from the server 14. As a modification, the investor terminal 12 may include a web browser, and the server 14 may include a function of a web server. In this case, installation of the investment support App 28 in the investor terminal 12 is unnecessary. The investor terminal 12 may access a website provided by the server 14 via the web browser, log in to the website with an ID and a password, and acquire various types of information regarding asset management from the server 14.

A seventh modification will be described. In recent years, there is an increasing concern in carbon credit transactions. A carbon credit is a tradable proof of a CO2 emission reduction amount. The carbon credit can also be referred to as a CO2 emission right or an offset credit of a CO2 emission amount. A carbon neutral fund that offsets a CO2 emission amount of an investment destination company by purchasing the carbon credit has appeared. Furthermore, in the future, it is conceivable that a carbon negative fund in which a purchased carbon credit exceeds a CO2 emission amount of an investment destination company appears. Thus, the information processing system 10 of the seventh modification presents statistical information based on a carbon credit purchased by a fund invested by the subject investor to the subject investor.

An example of a configuration of the information processing system 10 of the seventh modification will be described. In addition to the CO2 emission amount of each of the plurality of funds and the CO2 emission amount based on the known benchmark (for example, ACWI), the fund information storage unit 36 of the server 14 may store information regarding a purchase amount of the carbon credit purchased by each fund. Hereinafter, the information regarding the purchase amount of the carbon credit is indicated as an offset value (negative value) of the CO2 emission amount. As the purchase amount of the carbon credit increases, the offset value decreases, that is, an absolute value of the offset value increases. The statistics unit 54 of the server 14 may derive, according to a purchase amount of the carbon credit by an investment destination fund, a CO2 emission amount (value after offset) by the fund, and generate statistical information according to the derived CO2 emission amount (value after offset).

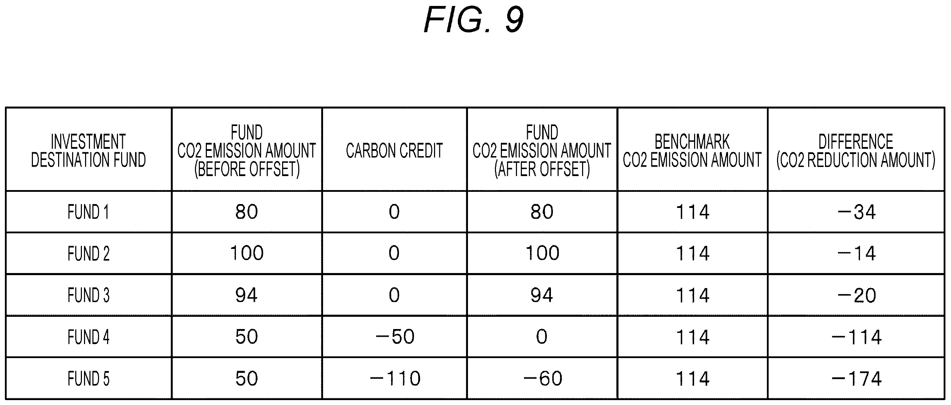

Fig. 9 illustrates an example of a CO2 reduction amount of a fund. Funds 1 to 3 in Fig. 9 are the same as the funds 1 to 3 in Fig. 7. A fund 4 in Fig. 9 is a carbon neutral fund, and a fund 5 in Fig. 9 is a carbon negative fund. Here, it is assumed that the subject investor invests in the fund 1, the fund 2, the fund 3, and the fund 4. A unit of a value indicated in Fig. 9 is ton/1 million (M) USD.

A fund CO2 emission amount (before offset) may be a value obtained by weight-averaging CO2 emission amounts of investment destination companies of each fund by a total market value (or sales, or the like) of each investment destination company. A carbon credit may be an offset value according to a purchase amount of the carbon credit in the fund. A value "0" of the carbon credit indicates that the carbon credit has not been purchased. A fund CO2 emission amount (after offset) is a value obtained by offsetting the carbon credit from the fund CO2 emission amount (before offset). A difference indicates a difference between the fund CO2 emission amount (after offset) and the benchmark CO2 emission amount, that is, indicates a substantial CO2 reduction amount of each fund.

The statistics unit 54 derives a CO2 reduction amount according to a portfolio (here, an investment amount in each fund) of the subject investor. For example, it is assumed that the investment amount of the subject investor is 0.01 M USD for the fund 1, 0.02 M USD for the fund 2, 0.02 M USD for the fund 3, and 0.01 M USD for the fund 4. In this case, the statistics unit 54 derives the CO2 reduction amount according to the portfolio of the subject investor as 2.16 tons (= 34 × 0.01 + 14 × 0.02 + 20 × 0.02 + 114 × 0.01). In this example, since the subject investor invests in the carbon neutral fund, the CO2 reduction amount larger than the CO2 reduction amount described in relation to Fig. 7 is presented to the subject investor. For example, the statistical information 64 in Fig. 8 displays the CO2 reduction amount 88 as 2.16 tons.

Moreover, the statistics unit 54 may derive a total amount of direct CO2 reduction amounts through the carbon credit purchased by each fund for one or more funds invested by the subject investor, and generate statistical information including the total amount of the direct CO2 reduction amounts. For example, in a case where the subject investor invests 0.01 M USD in the fund 4 in Fig. 9, statistical information in which the total amount of the direct CO2 reduction amounts is 0.5 tons (= 50 × 0.01) may be generated. Furthermore, in a case where the subject investor invests 0.01 M USD in each of the fund 4 and the fund 5 in Fig. 9, statistical information in which the total amount of the direct CO2 reduction amounts is 1.6 tons (= 50 × 0.01 + 110 × 0.01) may be generated.

Furthermore, the fund information storage unit 36 of the server 14 may further store information (for example, identification information, a URL of a website, or the like) regarding the carbon credit purchased by each fund. In a case where there is a fund that has purchased the carbon credit among the investment destinations of the subject investor, the investment support information generation unit 50 of the server 14 may acquire, from an external device (a website or the like), detailed information regarding a project that has organized the purchased carbon credit, on the basis of information stored in advance in the fund information storage unit 36 regarding the purchased carbon credit. The investment support information generation unit 50 may further set, in the investment support information 60, the detailed information regarding the project that has organized the purchased carbon credit.

The detailed information regarding the project that has organized the carbon credit may include (1) contents of activities of the project, (2) information regarding a region, a period, and a business operator, (3) certification that has been acquired, and (4) value added information. (4) The value added information may include, for example, information that is published on a website of the project that has generated or sold the carbon credit and indicates content that the project has contributed to the society (for example, ecosystem protection, water resource conservation, and the like, other than CO2 reduction). Furthermore, the value added information of the carbon credit may include information indicating a relationship between the project and the sustainable development goals (SDGs), for example, information indicating a goal or target of the SDGs to which the activities of the project have contributed, which is published on the website described above.

In the embodiment and the modifications described above, the information regarding the emission amount and the reduction amount of carbon dioxide is provided to the investor, but the technology described in the embodiment and the modifications described above can also be applied to providing information regarding emission amounts and reduction amounts of various types of greenhouse gases such as a methane gas and dinitrogen monoxide to the investor. That is, the technical ideas described in the embodiment and the modifications described above are also intended to provide information regarding greenhouse gases other than carbon dioxide.

Combinations of any of the embodiment and the modifications described above are also useful as embodiments of the present disclosure. New embodiments resulting from the combinations combine the effects of each of the combined embodiment and modifications. Furthermore, those skilled in the art will understand that the functions to be fulfilled by the constituent elements described in claims are implemented by individual constituent elements or by cooperation of the constituent elements described in the embodiment and the modifications.

The technologies described in the embodiment and the modifications can also be expressed as follows.

### [Item 1]

An information processing system including:
a storage unit that stores information regarding a financial product which is periodically invested by an individual and which makes diversified investments in a plurality of companies;
a selection unit that selects, on the basis of a predetermined algorithm, a specific company to be presented to the individual from among the plurality of companies that are investment destinations of the financial product; and
a presentation unit that presents, to the individual, information in which an activity of the specific company selected by the selection unit is associated with the individual.

According to the information processing system, it is possible to support an individual investor to maintain an interest and a concern in a reserve investment.

### [Item 2]

The information processing system according to item 1, in which
the selection unit selects the specific company on the basis of a configuration ratio of the investment destinations of the financial product.

According to this information processing system, it is possible to accurately select a company having a high degree of contribution by a reserve investment of an individual investor as a company that presents information to the individual investor.

### [Item 3]

The information processing system according to item 2, in which
the selection unit selects, based on a configuration ratio of investment destinations of each of a plurality of financial products periodically invested by the individual and an amount of assets of the individual based on each of the plurality of financial products, the specific company from among a plurality of companies that are the investment destinations of the plurality of financial products.

According to this information processing system, it is possible to more accurately select a company having a high degree of contribution by a reserve investment of an individual investor as a company that presents information to the individual investor.

### [Item 4]

The information processing system according to any one of items 1 to 3, further including
a statistics unit that generates statistical information regarding an investment of the individual in one or more financial products,
in which the presentation unit further presents the statistical information generated by the statistics unit to the individual as information indicating contribution of the individual.

According to this information processing system, it is possible to present a quantitative degree of contribution by an investment to an individual investor.

### [Item 5]

The information processing system according to item 4, in which
the statistical information includes at least one of (1) the number of companies as investment destinations summed over the one or more financial products, (2) the number of countries as investment destinations summed over the one or more financial products, and (3) an investment amount of money of the individual summed over the one or more financial products.

According to this information processing system, it is possible to present a quantitative degree of contribution by an investment to an individual investor.

### [Item 6]

The information processing system according to item 4 or 5, in which
the statistical information includes the number of themes as investment destinations summed over the one or more financial products.

According to this information processing system, it is possible to present a quantitative degree of contribution by an investment to an individual investor.

### [Item 7]

The information processing system according to any one of items 4 to 6, in which
the statistical information includes a reduction amount of carbon dioxide summed over the one or more financial products, based on the companies as the investment destinations.

According to this information processing system, it is possible to present a quantitative degree of contribution by an investment to an individual investor.

### [Item 8]

The information processing system according to any one of items 4 to 7, in which
the financial product invested by the individual includes a fund, and
the statistics unit derives an emission amount of carbon dioxide by the fund according to a purchase amount of a carbon credit by the fund, and generates the statistical information according to the derived emission amount of the carbon dioxide.

According to this information processing system, it is possible to present, to an individual investor, a quantitative degree of contribution by an investment (for example, contribution to reduction in an emission amount of carbon dioxide, and the like) in consideration of a carbon credit purchased by a fund.

### Industrial Applicability

The technology of the present disclosure can be applied to a device or a system that presents information to an individual who invests in a financial product.

### Reference Signs List

- 10: Information processing system
- 12: Investor terminal
- 14: Server
- 36: Fund information storage unit
- 42: Selection unit
- 44: Presentation unit
- 54: Statistics unit

## Claims

1. An information processing system comprising:
a storage unit that stores information regarding a financial product which is periodically invested by an individual and which makes diversified investments in a plurality of companies;
a selection unit that selects, on the basis of a predetermined algorithm, a specific company to be presented to the individual from among the plurality of companies that are investment destinations of the financial product; and
a presentation unit that presents, to the individual, information in which an activity of the specific company selected by the selection unit is associated with the individual.

2. The information processing system according to claim 1, wherein
the selection unit selects the specific company on the basis of a configuration ratio of the investment destinations of the financial product.

3. The information processing system according to claim 2, wherein
the selection unit selects, based on a configuration ratio of investment destinations of each of a plurality of financial products periodically invested by the individual and an amount of assets of the individual based on each of the plurality of financial products, the specific company from among a plurality of companies that are investment destinations of the plurality of financial products.

4. The information processing system according to any one of claims 1 to 3, further comprising
a statistics unit that generates statistical information regarding an investment of the individual in one or more financial products,
wherein the presentation unit further presents the statistical information generated by the statistics unit to the individual as information indicating contribution of the individual.

5. The information processing system according to claim 4, wherein
the statistical information includes at least one of (1) the number of companies as investment destinations summed over the one or more financial products, (2) the number of countries as investment destinations summed over the one or more financial products, and (3) an investment amount of money of the individual summed over the one or more financial products.

6. The information processing system according to claim 4, wherein
the statistical information includes the number of themes as investment destinations summed over the one or more financial products.

7. The information processing system according to claim 4, wherein
the statistical information includes a reduction amount of carbon dioxide summed over the one or more financial products, based on the companies as the investment destinations.

8. The information processing system according to claim 4, wherein
the financial product invested by the individual includes a fund, and
the statistics unit derives an emission amount of carbon dioxide by the fund according to a purchase amount of a carbon credit by the fund, and generates the statistical information according to the derived emission amount of the carbon dioxide.
